# EUROPEAN PATENT APPLICATION

(11) **EP 4 783 295 A1**
(43) Date of publication of application: **29.07.2026**
(21) Application number: 25867208.8
(22) Date of filing: 27.06.2025
(51) Int. Cl.: H01M 10/48, H01M 50/105, H01M 50/531

(54) **POUCH-TYPE SECONDARY BATTERY**

(30) Priority: 06.12.2024 KR 20240180376
(71) Applicant: LG ENERGY SOLUTION, LTD., Seoul 07335 (KR)
(72) Inventor: KIM, Won Joong, Yuseong-gu Daejeon 34122 (KR)
(74) Representative: Goddar, Heinz J.
(86) International application number: PCT/KR2025/009037
(87) International publication number: WO 2026/121438

(57) **Abstract**

The present disclosure relates to a pouch type secondary battery, and more specifically, to a pouch type secondary battery capable of easily determining whether an electrolyte is depleted from the outside without the need to disassemble a battery case.

## Description

### TECHNICAL FIELD

### CROSS-REFERENCE TO RELATED APPLICATIONS

The present application is based on and claims priority from Korean Patent Application No. 10-2024-0180376, filed on December 6, 2024, with the Korean Intellectual Property Office, the disclosure of which is incorporated herein in its entirety by reference.

### TECHNICAL FIELD

The present disclosure relates to a pouch type secondary battery, and more specifically, to a pouch type secondary battery capable of easily determining whether an electrolyte is depleted from the outside without the need to disassemble a battery case.

### BACKGROUND ART

In general, there are various types of a secondary battery, such as a nickel cadmium battery, a nickel hydrogen battery, a lithium-ion battery, a lithium-ion polymer battery, and a lithium metal battery. Such a secondary battery is widely used not only in small products such as smartphones, smart watches, smart rings, smart glasses, portable gaming devices, and electric bicycles, but also in large products requiring high power such as electric vehicles or hybrid vehicles, in energy storage systems (ESSs) storing surplus generated power or renewable energy, and in power storage devices for backup.

Such a secondary battery is classified into a pouch type and a can type depending on the material of the battery case. The pouch type accommodates the electrode assembly in a pouch made of a flexible polymer material with an irregular shape. And, the can type accommodates the electrode assembly in a case made of a material such as metal with a fixed shape.

A pouch type battery case is manufactured by drawing molding a flexible pouch film to form a cup portion. And, a pouch type secondary battery is manufactured by accommodating the electrode assembly in the receiving space of the cup portion, and injecting the electrolyte, then folding the battery case to seal the sealing portion.

As the service life of a secondary battery is prolonged and the secondary battery undergoes repeated charging and discharging, the amount of electrolyte inside it decreases. When the electrolyte in the secondary battery is completely depleted, the secondary battery should be discarded. However, it is impossible to determine the remaining amount of electrolyte and whether it is depleted without disassembling the battery case. In particular, when the depletion of the electrolyte is a critical factor in experiments or research on the secondary battery, there is a problem that it is very cumbersome and uneconomical to disassemble the battery case for each experiment to check whether the electrolyte is depleted.

### DISCLOSURE

### TECHNICAL PROBLEM

The present disclosure is directed to providing a pouch type secondary battery capable of easily determining whether an electrolyte is depleted from the outside without the need to disassemble a battery case.

The technical problems of the present disclosure are not limited to the above-described problems, and other problems not mentioned herein may be clearly understood by those skilled in the art from the following description of the present disclosure.

### TECHNICAL SOLUTION

A pouch type secondary battery according to an embodiment of the present disclosure for solving the above problems includes an electrode assembly formed by laminating electrodes and separators; a pouch type battery case accommodating the electrode assembly and an electrolyte therein; and a deformation unit whose shape is deformed depending on the remaining amount of the electrolyte, wherein the deformation unit includes a first deformation layer made of a flexible material and having waterproof and non-conductive properties; and a second deformation layer stacked on a first surface of the first deformation layer and changing in volume when absorbing the electrolyte.

Additionally, the first deformation layer and the second deformation layer may be attached and fixed to each other.

Additionally, the deformation unit may be formed in a disc shape.

Additionally, the second deformation layer may expand in volume when absorbing the electrolyte.

Additionally, the first deformation layer may be configured such that a second surface thereof forms a flat surface when the volume of the second deformation layer expands, and the second surface thereof forms a curved surface when the volume of the second deformation layer contracts.

Additionally, the pouch type battery case may be configured such that the area where the deformation unit is disposed protrudes outward in a flat shape when the second surface of the first deformation layer forms a flat surface, and the area where the deformation unit is disposed protrudes outward in a rounded shape when the second surface of the first deformation layer forms a curved surface.

Additionally, the deformation unit may be disposed so that one surface thereof is in direct contact with the pouch type battery case.

Additionally, the deformation unit may be disposed so that the second surface of the first deformation layer is in direct contact with the pouch type battery case.

Additionally, the deformation unit may be disposed between an outer wall of a cup portion accommodating the electrode assembly in the pouch type battery case and a sealing portion where the pouch type battery case is sealed.

Additionally, the electrode assembly may include an electrode tab extending from the electrode; and an electrode lead connected to the electrode tab and exposed to the outside of the battery case.

Additionally, a surface direction of the deformation unit may be toward the area where the electrode tab and the electrode lead are connected.

Additionally, a surface direction of the second deformation layer in the deformation unit may be toward the area where the electrode tab and the electrode lead are connected.

Additionally, the deformation unit may have an outer circumference of the second deformation layer surrounding the outer circumferential surface of the first deformation layer.

Other specific details of the present disclosure are included in the detailed description and drawings.

### ADVANTAGEOUS EFFECTS

According to embodiments of the present disclosure, at least the following effects are obtained.

It is possible to easily check the remaining amount of electrolyte and whether it is depleted with the naked eye from the outside of the secondary battery without disassembling the pouch type battery case.

The effects according to the present disclosure are not limited by the contents exemplified above, and more various effects are included in this specification.

### DESCRIPTION OF DRAWINGS

FIG. 1 is an assembly view of a pouch type secondary battery 1 according to an embodiment of the present disclosure.
FIG. 2 is a perspective view showing the expanded state of a second deformation layer 152 of a deformation unit 15 according to an embodiment of the present disclosure.
FIG. 3 is a side view of FIG. 2.
FIG. 4 is an enlarged cross-sectional view showing a deformation unit 15 in which a second deformation layer 152 is expanded in a pouch type secondary battery 1 according to an embodiment of the present disclosure.
FIG. 5 is an enlarged plan view of FIG. 4.
FIG. 6 is a perspective view showing the contracted state of a second deformation layer 152 of a deformation unit 15 according to an embodiment of the present disclosure.
FIG. 7 is a side view of FIG. 6.
FIG. 8 is an enlarged cross-sectional view showing a deformation unit 15 in which a second deformation layer 152 is contracted in a pouch type secondary battery 1 according to an embodiment of the present disclosure.
FIG. 9 is an enlarged plan view of FIG. 8.
FIG. 10 is a perspective view showing the expanded state of a second deformation layer 152a of a deformation unit 15a according to another embodiment of the present disclosure.
FIG. 11 is a side view of FIG. 10.
FIG. 12 is a perspective view showing the contracted state of a second deformation layer 152a of a deformation unit 15a according to another embodiment of the present disclosure.
FIG. 13 is a side view of FIG. 12.

### BEST MODE

The advantages and features of the present disclosure, and the methods for achieving them, will become clear by referring to the embodiments described in detail below with the accompanying drawings. However, the present disclosure is not limited to the embodiments disclosed below, but may be implemented in various different forms, and the present embodiments are provided only to make the disclosure of the present disclosure complete and to fully inform those having ordinary skill in the art to which the present disclosure pertains of the scope of the disclosure, and the present disclosure is defined only by the scope of the claims. Throughout the specification, the same reference numerals refer to the same components.

Unless otherwise defined, all terms (including technical and scientific terms) used in this specification may be used in a sense that can be commonly understood by those having ordinary skill in the art to which the present disclosure pertains. Additionally, terms defined in commonly used dictionaries are not to be ideally or excessively interpreted unless explicitly and specifically defined.

The terms used in this specification are for the purpose of describing the embodiments and are not intended to limit the present disclosure. In this specification, the singular form includes the plural form unless specifically otherwise stated in the phrase. The terms "comprise" and/or "comprising" used in the specification do not exclude the presence or addition of one or more other components in addition to the components mentioned.

Hereinafter, preferred embodiments of the present disclosure will be described in detail with reference to the accompanying drawings.

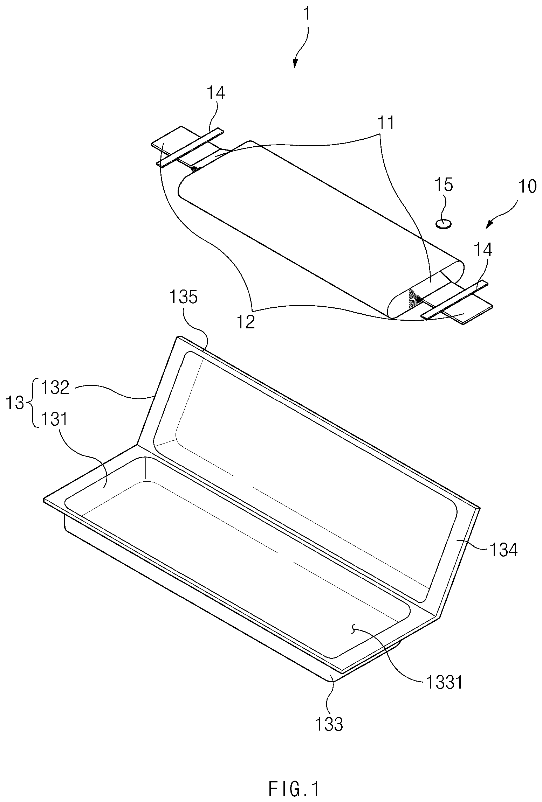

FIG. 1 is an assembly view of a pouch type secondary battery 1 according to an embodiment of the present disclosure.

According to the present disclosure, it is possible to easily determine whether the electrolyte is depleted from the outside of the secondary battery 1 without the need to disassemble the battery case 13. To this end, the pouch type secondary battery 1 according to the present disclosure includes an electrode assembly 10 formed by laminating electrodes and separators; a pouch type battery case 13 accommodating the electrode assembly 10 and an electrolyte therein; and a deformation unit 15 whose shape is deformed depending on the remaining amount of the electrolyte, wherein the deformation unit 15 includes a first deformation layer 151 made of a flexible material and having waterproof and non-conductive properties; and a second deformation layer 152 stacked on a first surface of the first deformation layer 151 and changing in volume when absorbing the electrolyte.

The secondary battery 1, as illustrated in FIG. 1, includes an electrode assembly 10 formed by alternately laminating electrodes and separators, and a battery case 13 accommodating the electrode assembly 10 therein.

The electrode assembly 10 is formed by manufacturing electrodes, that is, a positive electrode and a negative electrode, and laminating them on both sides of a separator to insulate them from each other. The electrode assembly 10 includes an electrode tab 11. The electrode tab 11 extends from the electrode of the electrode assembly 10 and serves as a path for supplying electricity generated inside the electrode assembly 10 to the outside. An electrode lead 12 is connected to the electrode tab 11 by spot welding or the like, and is exposed to the outside of the secondary battery 1. And, the secondary battery 1 supplies electricity to the outside through the electrode lead 12. A part of the electrode lead 12 is surrounded by an insulation unit 14. The insulation unit 14 is limited to being positioned at a sealing portion 134 where the first case 131 and the second case 132 of the battery case 13 are thermally fused, thereby bonding the electrode lead 12 to the battery case 13.

The pouch type battery case 13 is made of a flexible material. When a flexible pouch film 135 is drawing molded using a punch or the like, a part thereof is stretched to form a cup portion 133 including a receiving space 1331 in the form of a pocket, thereby manufacturing the battery case 13.

When the electrode lead 12 is connected to the electrode tab 11 of the electrode assembly 10 and an insulation unit 14 is formed on a part of the electrode lead 12, the electrode assembly 10 is accommodated in the receiving space 1331 of the cup portion 133, and an electrolyte is injected therein, then the sealing portion 134 that extends outward from the edges of the first case 131 and the second case 132 is sealed. At this time, the electrolyte is for moving lithium ions generated by the electrochemical reaction of the electrodes during charging and discharging of the secondary battery 1, and may contain a non-aqueous organic electrolyte that is a mixture of a lithium salt and a high-purity organic solvent, or a polymer electrolyte using a polymer. Through this method, a pouch type secondary battery 1 may be manufactured.

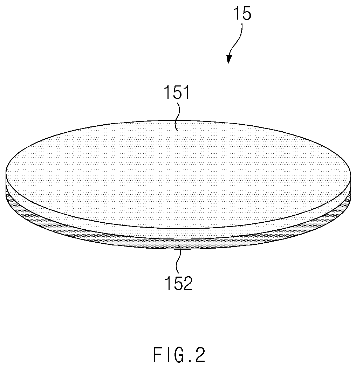

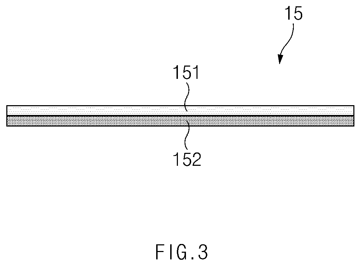

FIG. 2 is a perspective view showing the expanded state of a second deformation layer 152 of a deformation unit 15 according to an embodiment of the present disclosure, and FIG. 3 is a side view of FIG. 2.

According to the present disclosure, the pouch type secondary battery 1 includes a deformation unit 15 whose shape is deformed depending on the remaining amount of the electrolyte therein. And, the deformation unit 15 includes a first deformation layer 151 made of a flexible material and having waterproof and non-conductive properties; and a second deformation layer 152 stacked on a first surface of the first deformation layer 151 and changing in volume when absorbing the electrolyte.

As illustrated in FIGS. 2 and 3, the first deformation layer 151 and the second deformation layer 152 are stacked on each other. The first deformation layer 151 is made of a flexible material and may have a thin film shape. Thus, the shape of the first deformation layer 151 may be easily deformed as the volume of the second deformation layer 152 changes later.

This first deformation layer 151 is formed in direct contact with the pouch type battery case 13. At this time, in order to prevent the pouch type battery case 13 from being damaged, it is preferable not to absorb the electrolyte, and thus the first deformation layer 151 may have waterproof properties. Additionally, the first deformation layer 151 may have non-conductive properties to prevent a short circuit of electricity generated from the electrode assembly 10. For example, the first deformation layer 151 may be manufactured without limitation using various materials, such as rubber or silicone, Teflon (PTFE), polyurethane (PU), thermoplastic polyurethane (TPU), ethylene propylene diene monomer (EPDM), polyethylene (PE), thermoplastic vulcanizate (TPV), polypropylene (PP), polyester, polystyrene (PS), polyvinyl chloride (PVC), and other synthetic resins that are both waterproof and non-conductive, as long as they are flexible and have waterproof and non-conductive properties.

The second deformation layer 152 is formed by being stacked on the first surface of the first deformation layer 151 and may have a thin film shape. Thus, when the second deformation layer 152 is stacked on the first deformation layer 151 to form a deformation unit 15, the deformation unit 15 also has a thin film shape and thus may be easily disposed inside the pouch type battery case 13 later.

The volume of this second deformation layer 152 varies depending on the remaining amount of electrolyte. In particular, the volume of the second deformation layer 152 may expand when absorbing the electrolyte, and may contract when not absorbing the electrolyte. For example, the second deformation layer 152 may be manufactured using materials such as cellulose, polyacrylamide gel, natural polymer gel (alginic acid, agarose), super absorbent polymer (SAP) (sodium polyacrylate, polyvinyl alcohol (PVA)), bentonite, foaming polymers, and the like. In particular, it may be most preferable to include reversible and repeatedly usable cellulose, polyacrylamide gel, and natural polymer gel. However, as long as the volume may vary depending on the remaining amount of electrolyte, the second deformation layer 152 may be manufactured by including various materials without limitation.

The first deformation layer 151 and the second deformation layer 152 may be stacked on each other, and in particular, may be attached and fixed to each other. Thus, the shape of the first deformation layer 151 may be deformed as the volume of the second deformation layer 152 changes. To this end, the first deformation layer 151 and the second deformation layer 152 may be bonded by applying an adhesive, or may be thermally fused by applying heat and pressure thereto. Furthermore, among the surfaces where the first deformation layer 151 and the second deformation layer 152 contact each other, a protrusion may be formed on one surface and a groove may be formed on the other surface, so that the protrusion may be inserted into the groove to fix them together. That is, if the shape of the first deformation layer 151 may be deformed as the volume of the second deformation layer 152 changes, the first deformation layer 151 and the second deformation layer 152 may be attached and fixed to each other in various ways without limitation.

The deformation unit 15 may have a wide plate shape, and in particular, it is preferable to have a disk shape. If it has a rod shape that is long only in a specific direction, the first deformation layer 151 may be deformed concavely when the volume of the second deformation layer 152 expands. Then, the deformed shape of the deformation unit 15 may not be checked with the naked eye from the outside of the secondary battery 1.

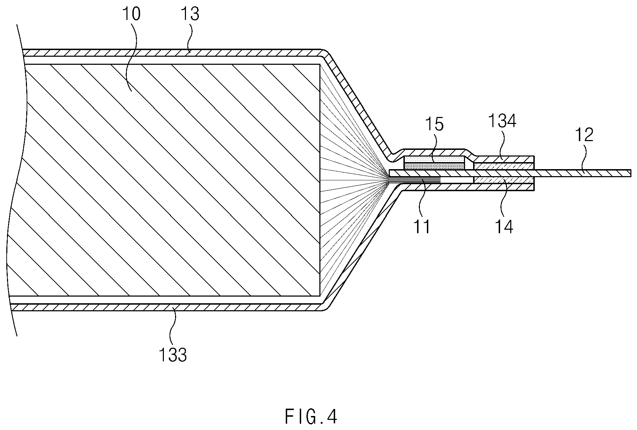

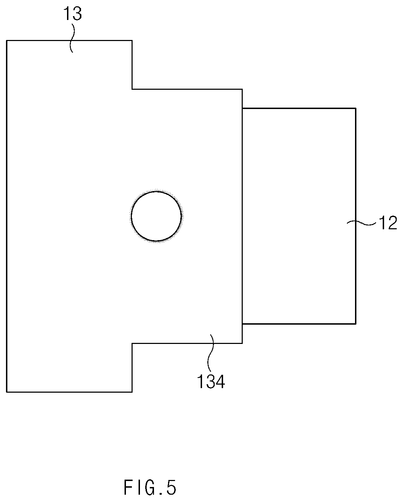

FIG. 4 is an enlarged cross-sectional view showing a deformation unit 15 in which a second deformation layer 152 is expanded in a pouch type secondary battery 1 according to an embodiment of the present disclosure, and FIG. 5 is an enlarged plan view of FIG. 4.

According to the present disclosure, the deformed shape of the deformation unit 15 should be easily checked with the naked eye even from the outside of the secondary battery 1. Therefore, as illustrated in FIG. 4, the deformation unit 15 is disposed so that one surface thereof is in direct contact with the pouch type battery case 13, and in particular, the second surface of the first deformation layer 151 is disposed in direct contact with the pouch type battery case 13. Thus, it is possible to easily check the remaining amount of electrolyte and whether the electrolyte is depleted with the naked eye from the outside of the secondary battery 1 without disassembling the pouch type battery case 13. Here, the second surface of the first deformation layer 151 refers to the opposite surface of the first surface of the first deformation layer 151 on which the second deformation layer 152 described above is stacked.

Due to the characteristics of the pouch type battery case 13 made of a flexible material, the area where the deformation unit 15 is disposed protrudes outward. However, if the deformation unit 15 is disposed on the cup portion 133, the externally convex protrusion may damage the appearance of the secondary battery 1, and interference may occur in the arrangement of the secondary batteries 1 when manufacturing a battery module or a battery pack by arranging them later.

Meanwhile, the sealing portion 134 is the area where the pouch type battery case 13 is sealed by applying heat and pressure while the sealing tool is in contact with both surfaces. Therefore, if the deformation unit 15 is disposed on the sealing portion 134, it may be damaged by the heat and pressure of the sealing tool.

Therefore, as illustrated in FIG. 4, the deformation unit 15 may be disposed between an outer wall of the cup portion 133 accommodating the electrode assembly 10 in the pouch type battery case 13 and the sealing portion 134 where the pouch type battery case 13 is sealed. And, the surface direction of the deformation unit 15 may be toward the area where the electrode tab 11 and the electrode lead 12 are connected, and in particular, the surface direction of the second deformation layer 152 may be toward the area where the electrode tab 11 and the electrode lead 12 are connected.

The second deformation layer 152 expands in volume when absorbing the electrolyte, and contracts in volume when not absorbing the electrolyte. If there is sufficient electrolyte inside the secondary battery 1, the second deformation layer 152 absorbs the electrolyte, thereby expanding in volume. Then, as illustrated in FIG. 4, the first deformation layer 151 stacked on the second deformation layer 152 may have its second surface become flat due to the expanded second deformation layer 152. At this time, the second surface of the first deformation layer 151 directly contacts the pouch type battery case 13, and thus, as illustrated in FIGS. 4 and 5, the area of the battery case 13 where the deformation unit 15 is disposed protrudes outward in a flat shape.

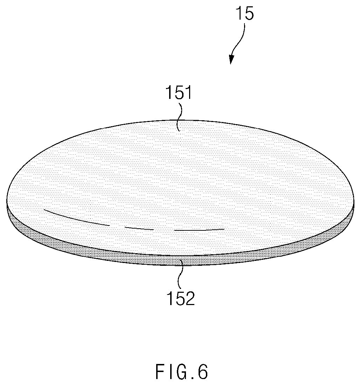

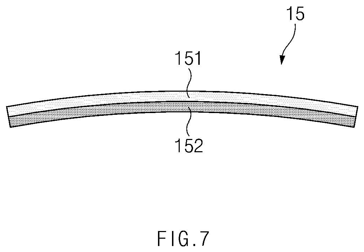

FIG. 6 is a perspective view showing the contracted state of a second deformation layer 152 of a deformation unit 15 according to an embodiment of the present disclosure, and FIG. 7 is a side view of FIG. 6.

If the electrolyte inside the secondary battery 1 is depleted, the second deformation layer 152 cannot absorb the electrolyte, thereby contracting in volume. Then, as illustrated in FIGS. 6 and 7, the first deformation layer 151 stacked on the second deformation layer 152 may have its second surface become curved due to the contracted second deformation layer 152.

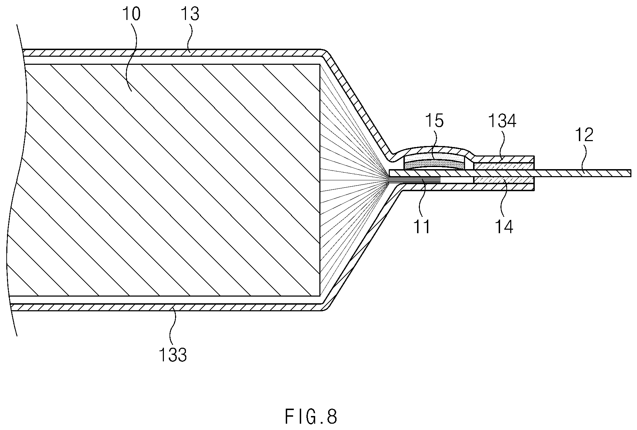

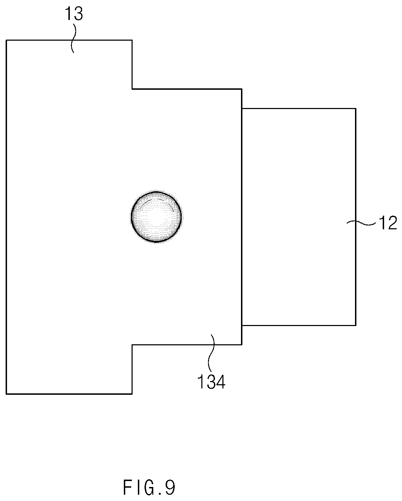

FIG. 8 is an enlarged cross-sectional view showing a deformation unit 15 in which a second deformation layer 152 is contracted in a pouch type secondary battery 1 according to an embodiment of the present disclosure, and FIG. 9 is an enlarged plan view of FIG. 8.

The second surface of the first deformation layer 151 is in direct contact with the pouch type battery case 13, and thus if the second surface of the first deformation layer 151 forms a curved surface, the area where the deformation unit 15 is disposed in the battery case 13 protrudes outward in a rounded shape, as illustrated in FIGS. 8 and 9.

In this way, it may be determined even from the outside of the secondary battery 1 that the electrolyte is sufficient if the area where the deformation unit 15 is disposed protrudes outward in a flat shape, and the electrolyte is depleted if the area protrudes outward in a rounded shape. That is, it is possible to easily check the remaining amount of electrolyte and whether it is depleted with the naked eye from the outside of the secondary battery 1 without disassembling the pouch type battery case 13.

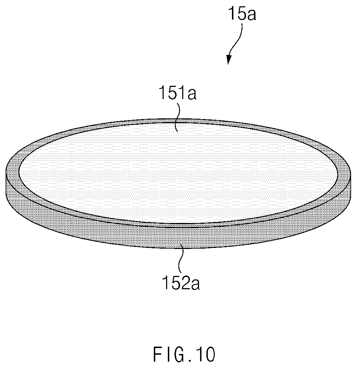

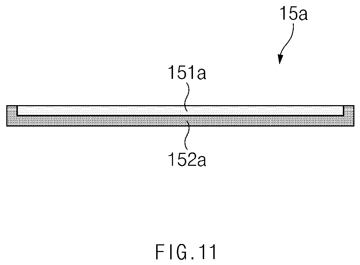

FIG. 10 is a perspective view showing the expanded state of a second deformation layer 152a of a deformation unit 15a according to another embodiment of the present disclosure, and FIG. 11 is a side view of FIG. 10.

According to an embodiment of the present disclosure, the first deformation layer 151 and the second deformation layer 152 may be attached and fixed to each other. At this time, the diameters of the first deformation layer 151 and the second deformation layer 152 may be the same. However, according to another embodiment of the present disclosure, the outer circumference of the second deformation layer 152a may have a shape surrounding the outer circumferential surface of the first deformation layer 151a.

As illustrated in FIGS. 10 and 11, the outer circumference of the second deformation layer 152a protrudes with a constant width and thickness to form a specific space, and the first deformation layer 151a may be inserted into this specific space to manufacture the deformation unit 15a. At this time, the diameter of the specific space of the second deformation layer 152a may be the same as that of the first deformation layer 151a. Therefore, without the process of applying an adhesive to or thermally fusing the first deformation layer 151a and the second deformation layer 152a, the deformation unit 15a may be easily manufactured simply by inserting the first deformation layer 151a into the space of the second deformation layer 152a.

If the electrolyte inside the secondary battery 1 is sufficient, the second deformation layer 152a absorbs the electrolyte, thereby expanding in volume. Then, the first deformation layer 151a stacked on the second deformation layer 152a may have its second surface become flat due to the expanded second deformation layer 152a. And, the area where the deformation unit 15a is disposed in the battery case 13 protrudes outward in a flat shape.

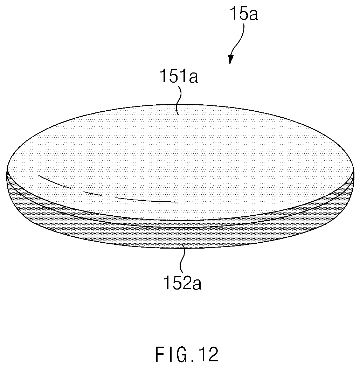

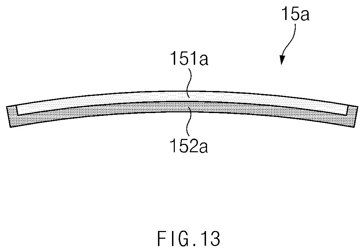

FIG. 12 is a perspective view showing the contracted state of a second deformation layer 152a of a deformation unit 15a according to another embodiment of the present disclosure, and FIG. 13 is a side view of FIG. 12.

If the electrolyte inside the secondary battery 1 is depleted, the second deformation layer 152a cannot absorb the electrolyte, thereby contracting in volume. Then, as illustrated in FIGS. 6 and 7, the first deformation layer 151a stacked on the second deformation layer 152a may have its second surface become curved due to the contracted second deformation layer 152a. And, as illustrated in FIGS. 8 and 9, the area where the deformation unit 15a is disposed in the battery case 13a protrudes outward in a rounded shape.

In this way, it may be determined even from the outside of the secondary battery 1 that the electrolyte is sufficient if the area where the deformation unit 15a is disposed protrudes outward in a flat shape, and the electrolyte is depleted if the area protrudes outward in a rounded shape. That is, it is possible to easily check the remaining amount of electrolyte and whether it is depleted with the naked eye from the outside of the secondary battery 1 without disassembling the pouch type battery case 13.

Those having ordinary skill in the art to which the present disclosure pertains will understand that the present disclosure may be implemented in other specific forms without changing the technical idea or essential characteristics thereof. Therefore, it should be understood that the embodiments described above are exemplary and not limiting in all respects. The scope of the present disclosure is indicated by the appended claims described below rather than the detailed description above, and various embodiments derived from the meaning and scope of the claims and the equivalent concepts thereof should be construed as being included in the scope of the present disclosure.

### [Description of Reference Numerals]

| | | | |
|---|---|---|---|
| 1: | Secondary battery | 10: | Electrode assembly |
| 11: | Electrode tab | 12: | Electrode lead |
| 13: | Battery case | 14: | Insulation unit |
| 15: | Deformation unit | 131: | First case |
| 132: | Second case | 133: | Cup portion |
| 1331: | Receiving space | 134: | Sealing portion |
| 135: | Pouch film | 151: | First deformation layer |
| 152: | Second deformation layer | | |

## Claims

1. A pouch type secondary battery comprising:
an electrode assembly formed by laminating electrodes and separators;
a pouch type battery case accommodating the electrode assembly and an electrolyte therein; and
a deformation unit whose shape is deformed depending on the remaining amount of the electrolyte,
wherein the deformation unit comprises:
a first deformation layer made of a flexible material and having waterproof and non-conductive properties; and
a second deformation layer stacked on a first surface of the first deformation layer and changing in volume when absorbing the electrolyte.

2. The pouch type secondary battery according to claim 1,
wherein the first deformation layer and the second deformation layer are attached and fixed to each other.

3. The pouch type secondary battery according to claim 1,
wherein the deformation unit is formed in a disc shape.

4. The pouch type secondary battery according to claim 1,
wherein the second deformation layer expands in volume when absorbing the electrolyte.

5. The pouch type secondary battery according to claim 4,
wherein the first deformation layer is configured such that:
a second surface thereof forms a flat surface when the volume of the second deformation layer expands, and the second surface thereof forms a curved surface when the volume of the second deformation layer contracts.

6. The pouch type secondary battery according to claim 5,
wherein the pouch type battery case is configured such that:
the area where the deformation unit is disposed protrudes outward in a flat shape when the second surface of the first deformation layer forms a flat surface, and
the area where the deformation unit is disposed protrudes outward in a rounded shape when the second surface of the first deformation layer forms a curved surface.

7. The pouch type secondary battery according to claim 1,
wherein the deformation unit is disposed so that one surface thereof is in direct contact with the pouch type battery case.

8. The pouch type secondary battery according to claim 7,
wherein the deformation unit is disposed so that a second surface of the first deformation layer is in direct contact with the pouch type battery case.

9. The pouch type secondary battery according to claim 1,
wherein the deformation unit is disposed between an outer wall of a cup portion accommodating the electrode assembly in the pouch type battery case and a sealing portion where the pouch type battery case is sealed.

10. The pouch type secondary battery according to claim 1,
wherein the electrode assembly comprises:
an electrode tab extending from the electrode; and
an electrode lead connected to the electrode tab and exposed to the outside of the battery case.

11. The pouch type secondary battery according to claim 10,
wherein a surface direction of the deformation unit is toward the area where the electrode tab and the electrode lead are connected.

12. The pouch type secondary battery according to claim 11,
wherein a surface direction of the second deformation layer in the deformation unit is toward the area where the electrode tab and the electrode lead are connected.

13. The pouch type secondary battery according to claim 1,
wherein the deformation unit has an outer circumference of the second deformation layer surrounding the outer circumferential surface of the first deformation layer.
